# EUROPEAN PATENT APPLICATION

(11) **EP 4 654 379 A2**
(43) Date of publication of application: **26.11.2025**
(21) Application number: 25208638.4
(22) Date of filing: 10.07.2023
(51) Int. Cl.: H01Q 1/27

(54) **IMPROVED COEXISTENCE OF ACTIVE DIMMING DISPLAY LAYERS AND ANTENNAS**

(30) Priority: 11.07.2022 US 202217861942
(62) Divisional of application: 23184420.0
(71) Applicant: Meta Platforms Technologies, LLC, Menlo Park, CA 94025 (US)
(72) Inventor: DE LUIS, Javier Rodriguez, Menlo Park, 94025 (US); HAN, Liang, Menlo Park, 94025 (US); ZHANG, Lijun, Menlo Park, 94025 (US); LIN, Chia-Ching, Menlo Park, 94025 (US); LI, Meijiao, Menlo Park, 94025 (US); SEARS, Jasmine Soria, Menlo Park, 94025 (US)
(74) Representative: Murgitroyd & Company

(57) **Abstract**

The disclosed system may include a support structure, a lens mounted to the support structure, where the lens includes at least one conductive layer that includes conductive material, and an antenna disposed on the support structure within a specified maximum distance from the lens. Various characteristics of the lens or the antenna may be modified to reduce coupling between the antenna and the layer of conductive material in the lens. Various other wearable devices, apparatuses, and methods of manufacturing are also disclosed.

## Description

### SUMMARY OF THE INVENTION

According to the present invention there is provided a system comprising: a support structure; a lens mounted to the support structure, the lens including at least one conductive layer that includes conductive material; and an antenna disposed on the support structure within a specified maximum distance from the lens; wherein one or more characteristics of the lens or the antenna are modified to reduce coupling between the antenna and the layer of conductive material in the lens.

Optionally the conductive layer of the lens comprises an active dimming layer configured to actively dim incoming light.

Optionally the conductive material of the active dimming layer comprises a transparent conductive oxide.

Optionally, the conductive material of the active dimming layer comprises indium tin oxide.

Optionally, modifying the characteristics of the lens or the antenna includes increasing a distance between the conductive layer including the conductive material and the antenna.

Optionally the conductive material covers at least a minimum specified portion of the lens.

Optionally, modifying the characteristics of the lens or the antenna includes removing at least a portion of the conductive material from the lens.

Optionally, the amount of conductive material removed from the lens is determined based on a minimum radiated power specified for use by the antenna.

Optionally, the amount of conductive material removed from the lens is determined based on a specified maximum amount of signal loss for the antenna.

Optionally, modifying the characteristics of the lens or the antenna includes routing the antenna further away from the conductive layer.

Optionally routing the antenna further away from the conductive layer includes routing one or more traces of the antenna to a position of the support structure that is at least a minimum specified distance from the conductive layer.

Optionally, modifying the characteristics of the lens or the antenna includes increasing a surface resistance of the conductive material.

Optionally, increasing a surface resistance of the conductive material includes cutting one or more slits into the conductive layer of the lens.

Optionally the slits cut into the conductive layer of the lens comprise non-visible slits.

According to the invention there is further provided a wearable device comprising: a support structure; a lens mounted to the support structure, the lens including at least one conductive layer that includes conductive material; and an antenna disposed on the support structure within a specified maximum distance from the lens; wherein one or more characteristics of the lens or the antenna are modified to reduce coupling between the antenna and the layer of conductive material in the lens.

Optionally, modifying the characteristics of the lens or the antenna includes rerouting an antenna feed associated with the antenna at least a minimum specified distance away from the conductive layer of the lens.

Optionally, modifying the characteristics of the lens or the antenna includes modifying a thickness of the conductive material on the conductive layer.

Optionally, modifying the characteristics of the lens or the antenna includes cutting one or more slits into the conductive layer of the lens.

Optionally, modifying the characteristics of the lens or the antenna includes modifying at least one of: a length of the slits; a shape of the slits; or a placement of the slits on the conductive layer of the lens.

According to the present invention there is yet further provided a method of manufacturing comprising: providing a support structure; mounting a lens to the support structure, the lens including at least one conductive layer that includes conductive material; and disposing an antenna on the support structure within a specified maximum distance from the lens; wherein one or more characteristics of the lens or the antenna are modified to reduce coupling between the antenna and the layer of conductive material in the lens.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is an illustration of a wearable electronic device that includes lenses having at least one conductive layer.
FIG. 2A is an illustration of a lens that is part of a pair of augmented reality glasses where the lenses include an active dimming layer.
FIG. 2B is an illustration of a lens that is part of a pair of augmented reality glasses where at least a portion of the active dimming layer has been removed.
FIG. 3 is an illustration of a chart that shows antenna efficiency degradation in relation to the amount of trimming applied to the active dimming layer.
FIG. 4 is an illustration of a cross section of a lens of a pair of augmented reality glasses where at least some of the active dimming layer has been removed.
FIG. 5 is an illustration of a chart that shows antenna efficiency degradation in relation to the amount of surface resistance of the active dimming layer.
FIG. 6A is an illustration of a cross section of a lens having an antenna and a slit cut into an active dimming layer.
FIG. 6B is an illustration of a chart showing antenna radiation frequency at different frequencies when slits of different lengths are used.
FIG. 6C is an illustration showing changes in radiation efficiency when implementing slits in the active dimming layer.
FIG. 7A is an illustration of a cross section of a lens having an antenna and dual slits cut into an active dimming layer.
FIG. 7B is an alternative illustration of a cross section of a lens having an antenna and dual slits cut into an active dimming layer.
FIG. 7C is an illustration of a chart showing changes in antenna radiation efficiency when different numbers of slits are used.
FIG. 7D is an illustration showing changes in radiation efficiency when dual slits are cut into the active dimming layer.
FIG. 8 is a flow diagram of an exemplary method of manufacturing a wearable electronic device that includes at least one lens with a conductive layer.
FIG. 9 is an illustration of exemplary augmented-reality glasses that may be used in connection with embodiments of this disclosure.
FIG. 10 is an illustration of an exemplary virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

The present disclosure is generally directed to various methods and systems for reducing coupling that may occur between antennas and conductive layers on augmented reality (AR) glass lenses. For instance, AR glasses or other wearable electronic devices may include lenses that provide features such as active dimming. The active dimming may include materials that increase light blockage when ambient light is high, and decrease light blockage when ambient light is low. This allows the user to see their surrounding environment as well as objects displayed in their AR glasses more easily in each situation, and further allows the user to see. The active dimming feature may involve the use of conductive active dimming layers. In such cases, the outer coating of the active dimming lenses, for example, may include transparent conductive oxides (TCOs). These TCOs may be used, in conjunction with an applied voltage, to provide the active dimming. The TCOs work well for active dimming, but may detrimentally reduce the efficiency of nearby antennas. Indeed, the active dimming layers can have a very low conductivity. This low conductivity may cause the active dimming layers to absorb antenna radiation, causing degradation of the antenna's performance and efficiency.

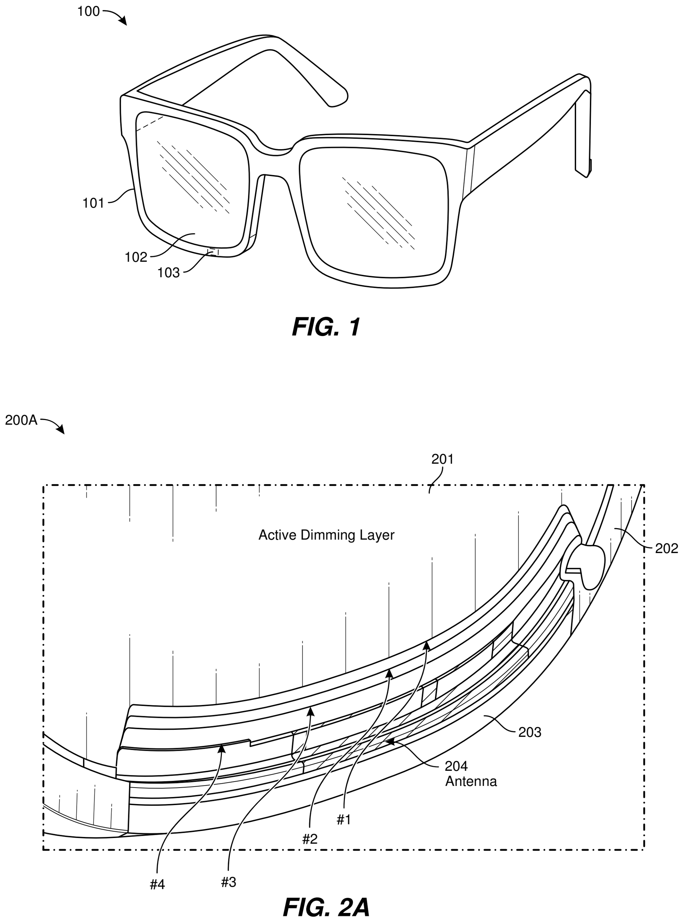

The embodiments described herein introduce multiple different methods and systems for reducing the coupling that occurs between antennas and active dimming (or other conductive) layers on AR glasses. For example, one method for reducing coupling may include increasing the distance between the conductive (e.g., active dimming TCO) material and the antennas. In such cases, this distance may be increased by trimming back the TCO material on the lenses and/or by rerouting the antenna to be further away from the TCO material. Another method may include increasing the surface resistance of the conductive TCO layer. In such embodiments, a more insulating material may be used that has higher surface resistance. This higher insulating material may reduce the amount of current that flows through the TCO layer and, consequently, less of the antenna's power may be dissipated. In some cases, the surface resistance may be increased by decreasing the thickness of the active dimming (AD) layer(s), or by altering the process by which the AD material is produced, or by using a different type of AD material. Still further, other methods for reducing coupling may include cutting minute (e.g., microscopic) slits in the active dimming material. These slits may not be visible to humans, but may provide a barrier (of different lengths, widths, or shapes) between the radiating antenna and the AD layer. This barrier may reduce or prevent the antenna's power from dissipating into the AD layer. These embodiments will be described further below with regard to FIGS. 1-10.

Features from any of the embodiments described herein may be used in combination with one another in accordance with the general principles described herein. These and other embodiments, features, and advantages will be more fully understood upon reading the following detailed description in conjunction with the accompanying drawings and claims.

FIG. 1 illustrates an embodiment of a wearable electronic device 100. The wearable electronic device 100 may be a pair of augmented reality glasses. In other embodiments, the wearable electronic device may be a smartwatch or may be a different kind of eyewear, or may be some other type of mobile electronic device that implements active dimming or implements a display portion that includes at least one layer of conductive material. In the example embodiment of FIG. 1, the augmented reality (AR) glasses may include a structural frame 101 and two lenses 102, one or more of which may include an antenna 103 placed nearby. These lenses may include an active dimming layer that includes a coating of a transparent conductive oxide (TCO) such as indium tin oxide (ITO) or some other type of TCO.

The TCO material may be a poor conductor of electricity and may generally be referred to herein as a poor conductor material. It will be recognized that when using the terms "poor conductor" or "poor conductor materials" herein, the terms may refer to materials that are slightly conductive, but are very poor conductors. Thus, poor conductor materials may encompass materials that have a conductivity that is greater than zero, but still very low. Thus, a poor conductor material may refer to any material that may impair antenna performance by absorbing the antenna's radiated power. Indeed, the embodiments herein are designed to counteract or reduce the coupling that may occur between an antenna (e.g., 103) and an active dimming or other conductive layer.

FIG. 2A illustrates an embodiment of a lens 200A that may be similar to or the same as lens 102 of FIG. 1. The lens 200A may include an active dimming layer 201 (or AD layer 201 herein). The AD layer 201 may include one or more coatings of a transparent conductive oxide material or other active dimming material. This TCO material may, at least initially, cover the entire lens 200A. In this embodiment, an antenna 204 may be positioned in the rim 202 of the AR glasses on a substrate 203. As can be seen in FIG. 2A, this antenna 204 may abut or may be placed very near to the AD layer 201. As such, at least some portion of the radiating power sent to the antenna 204 (or received at the antenna 204) may be absorbed by the conductive AD layer 201. To reduce or remove this coupling, the embodiments herein may remove at least some portion of the AD layer 201. In FIG. 2A, the numbers 1-4 indicate different levels of AD layer removal.

For instance, #1 points to the option that removes the most TCO material. Option #2 removes less TCO material (e.g., 1mm less), option #3 removes still less TCO material (e.g., 2mm less than option #1), and option #4 removes even less TCO material (e.g., 3mm less than option #1). As more TCO material is removed, antenna radiation efficiency may improve, as less coupling may occur between the antenna 204 and the AD layer 201. However, removing more TCO material may result in a larger portion of the lens 200 that lacks active dimming capabilities. As such, the embodiments here may be designed to remove only enough of the TCO layer to allow the antenna to function at least at a minimum capacity. Thus, in this manner, the amount of TCO material trimmed back may depend on which antenna is being used. Some antennas may require a higher total radiated power to function properly. For those antennas, more TCO material may be removed (e.g., up to #2 or #1), while for antennas that require less total radiated power to function properly, less TCO material may be removed (e.g., up to #4 or #3).

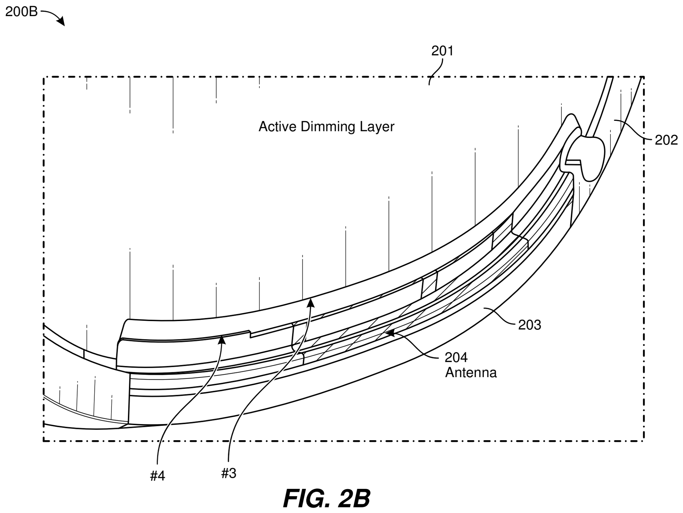

FIG. 2B illustrates an embodiment in which TCO material has been removed from the bottom of the lens 200B up to the line indicated by arrow #3. As noted above, some of the options #1-#4 may be better in certain situations than others. For example, the antenna 204 may be substantially any type of antenna including a monopole antenna, a dipole antenna, a slit antenna, a loop antenna, or other type of antenna. In other cases, multiple antennas may be placed in proximity of the TCO layer. In each of these scenarios, more or less TCO material may be trimmed back from the lens 200 depending on which types of antennas are being used and/or whether multiple antennas are being used. Still further, these antennas may be designed for specific implementations including WiFi, Bluetooth, cellular (e.g., long term evolution (LTE)), ultrawideband (UWB), global positioning system (GPS), or other antenna implementations. In cases where higher power is used, for instance, more material may be trimmed back from the AD layer 201. Conversely, in antenna implementations where less power is used, less TCO material may be trimmed back from the AD layer 201.

In some embodiments, the TCO material may be trimmed or removed using an etching process. Indeed, the embodiments herein may implement laser etching or other manufacturing equipment designed to etch the TCO material away. The etching process may take a lens (e.g., lens 200) that is fully covered with a layer of TCO material or other active dimming or conductive material. The etching equipment may use physical etching implements or specially configured lasers to remove some amounts of TCO material. The material may be removed in horizontal lines, in vertical lines, or in shapes. Moreover, the conductive material may be removed from the lens 200 in different sizes or patterns. In other embodiments, the TCO material may be cut back or trimmed back using precision cutting equipment. This equipment may be configured to remove the TCO material up to a specific line (e.g., 1-4) or according to a specific pattern. This pattern or shape or length or width may be dependent on the type of radio being used or which specific antenna implementation is being used. Other methods of trimming or removing TCO or other conductive material may additionally or alternatively be used.

In some embodiments, instead of trimming the TCO material back, the lenses may instead be initially produced or manufactured with less TCO material. That is, the lenses (e.g., 200A) may be manufactured with cutouts or portions of the lens that do not include the TCO (or other conductive) coating. Thus, in such cases, the lens 200A may be manufactured to include the active dimming layer 201 that covers most of the lens up to the line indicated by #1, or up to the line indicated by #2, or #3, or #4. In some embodiments, for instance, chemical solutions or other types of materials may be deposited on the lens so that the TCO material is not applied to the regions under the lines 1, 2, 3, or 4. Other methods of manufacturing a lens with a TCO coating that covers most, but not all, of the lens may also be used as an alternative to trimming back the TCO coating off of a fully covered lens.

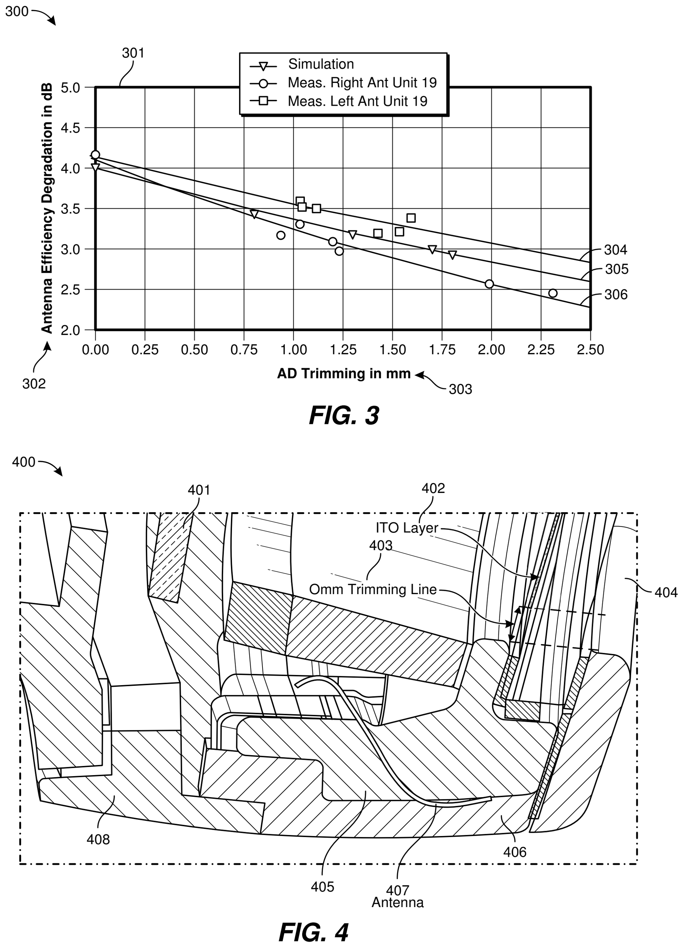

FIG. 3 illustrates an embodiment 300 of a chart 301 that shows how trimming back the AD layer may improve antenna efficiency. The chart 301 shows, on the x-axis 303, an amount of AD layer trimming in millimeters from 0mm to 2.5mm. This is a representation of the distance between the antenna (e.g., 204) and the start of the AD layer. The chart 301 further shows, on the y-axis 302, an amount of antenna efficiency degradation in decibels (dB). In a simulation 305, for example, the amount of antenna efficiency degradation may go down from 4dB at 0mm of AD trimming to approximately 2.6dB at 2.5mm of trimming. Similarly, in measured tests 304 and 306, the measurements dropped from approximately 4.2dB at 0mm AD trimming to 2.8dB and 2.3dB at 2.5mm trimming, respectively. As such, it can be seen that an increased amount of AD layer trimming may reduce antenna efficiency degradation in both simulations and in real-world tests.

FIG. 4 illustrates an embodiment 400 of a cross section of the rim portion 401 of a pair of AR glasses. The rim portion 401 may include inner and outer frame portions 404 and 408, an active dimming layer 402, along with an antenna 406 linked to an antenna feed 407. Element 405 may comprise selectively metalized, conductive plastic. This metalized, conductive plastic may be metal plated and may act as an antenna trace for the antenna 406. As indicated by element 403, this embodiment may include 0mm of trim between the antenna trace and the active dimming layer 402 (as such, the antenna trace may abut the active dimming layer 402). Instead of trimming or removing portions of the AD layer, the embodiment 400 of FIG. 4 may increase the surface resistance of the conductive active dimming layer 402. By increasing the surface resistance of the AD layer 402, less current will flow through the TCO material and less antenna power will be dissipated over the AD layer.

The surface resistance of the AD layer 402 may be increased in a variety of ways. Firstly, the surface resistance may be increased by using different active dimming materials that are more insulating. For instance, in some embodiments, plastic or glass or other high resistance materials may be used. With more insulating materials, less current will flow through the TCO material and less of the antenna's power will be absorbed by the AD layer 402. Secondly, the surface resistance of the AD layer 402 may be heightened by decreasing the thickness of the AD layer. Decreasing the thickness may assist in increasing the surface resistance of the AD layer. Thirdly, the surface resistance of the AD layer 402 may be increased by producing the AD layer using different processes. Different methods of manufacturing may result in one or more AD layers being increasingly resistant to current flow. This surface resistance may reduce coupling between the antenna 406 and the AD layer 402, and may prevent or reduces antenna efficiency degradation.

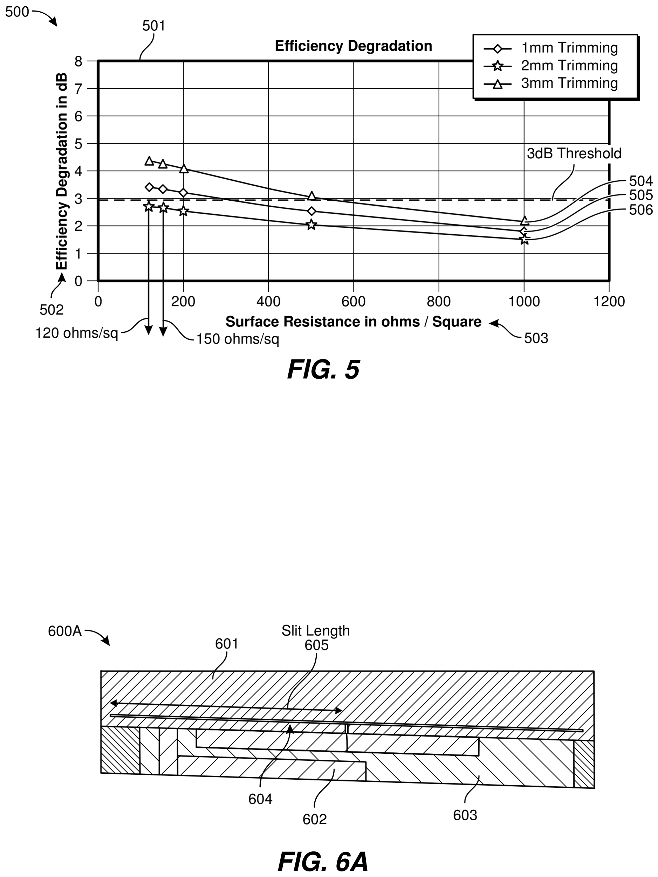

FIG. 5 shows an embodiment 500 of a chart 501 showing antenna efficiency degradation for different levels of surface resistance and, in this case, different levels of AD layer trimming. The x-axis 502 of the chart shows antenna efficiency degradation in dB, while the y-axis 503 shows surface resistance in Ohms/square. Line 504, which corresponds to no AD layer trimming, shows a reduction in antenna efficiency degradation from approximately 4.5dB to 2.1dB at 1,000 Ohms of surface resistance. Lines 505 and 506, which correspond to 1mm and 2mm of AD layer trimming, respectively, show similar degradation curves, although because those curves introduce the added benefit of AD layer trimming, they start at a correspondingly lower level of antenna efficiency degradation. Thus, as can be seen in chart 501, the more the AD layer is imbued with surface resistance, the less the antenna efficiency degrades, resulting in improved antenna radiating power for transmission and reception of data.

FIG. 6A illustrates an embodiment 600A of a slit 604 that may be cut into a conductive (e.g., TCO) layer 601 of a pair of augmented reality glasses. The glasses may include an antenna 602 embedded into a substrate 603. The antenna may abut or may be near to the conductive layer 601. Accordingly, at least in some embodiments, one or more slits may be cut, etched, or otherwise formed into the conductive layer 601. These slits may be small enough to not be visible to the human eye. In some cases, as noted above, modifying the characteristics of the lens may include increasing the surface resistance of the conductive material on the lens. As shown in FIG. 6A, increasing the surface resistance of the conductive material may include cutting one or more slits (e.g., 604) into the conductive layer 601 of the lens. These slits may choke the currents flowing in the conductive material, as less current will be able to flow over or through the slit.

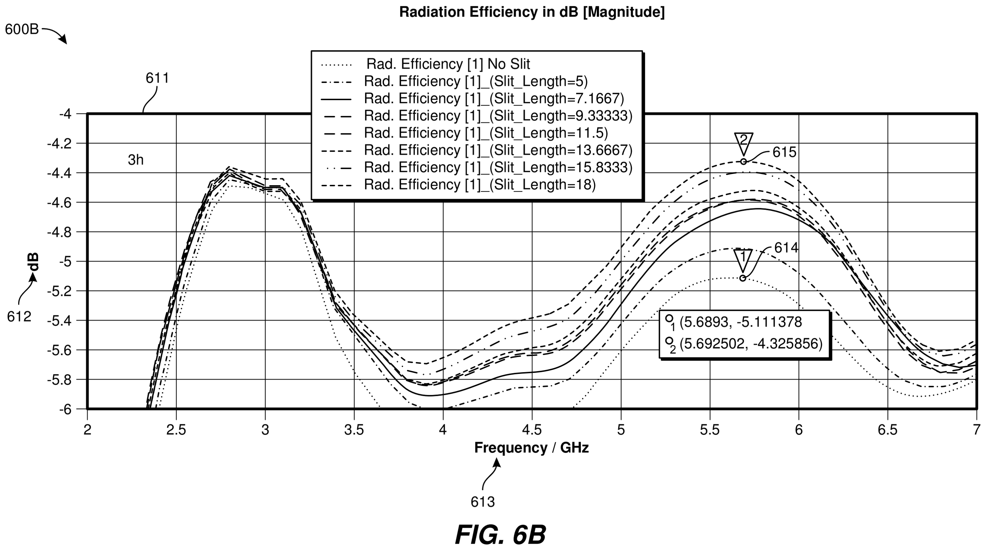

This is demonstrated in embodiment 600B of FIG. 6B. Embodiment 600B illustrates a chart 611 that shows different antenna radiation efficiency measurements at different slit lengths (e.g., 605 of FIG. 6A). For instance, points 614 and 615 show low and high measurements for antenna radiation efficiency. In the chart 611, the x-axis 613 shows measurements taken at different frequencies (in GHz), while the y-axis 612 shows the level of antenna radiation efficiency in decibels (dB). Point 614 illustrates an implementation with no slit and a high signal loss of approximately -5.1 dB, while point 615 illustrates an implementation with a slit having a length of 18mm. This implementation with a slit shows only -4.3dB in signal loss, indicating that less current is flowing across the active dimming layer of the augmented reality glasses in cases where a slit (and, particularly, a longer and/or wider slit) is used.

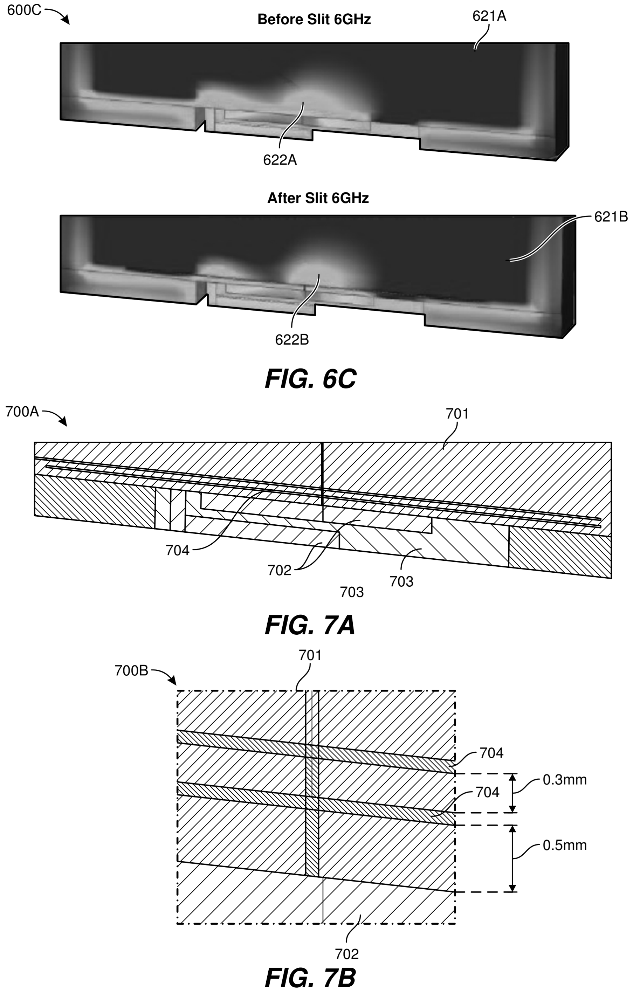

In some embodiments, the characteristics of these slits may be changed to accommodate different types of lenses, different sizes of lenses, or implementations that use different types of active dimming material that may be more or less conductive. For instance, these embodiments may modify the length of the slits, where a longer length may correspond to higher surface resistance and less current flow over the TCO surface (leading to greater antenna radiation efficiency). Additionally or alternatively, these embodiments may modify the shape of the slits (e.g., square, rectangle, circle, etc.) leading to potentially higher surface resistance and better radiation efficiency. Still further, these embodiments may alter the placement of the slits on the conductive layer(s) of the lens. Placing the slits directly above the antenna(s) may reduce radiation leakage (e.g., as shown in FIG. 6C). Indeed, as can be seen in embodiment 600C of FIG. 6C, implementations that do not use a slit (e.g., 621A) may show a lower surface resistance, and a more distributed radiation leakage pattern 622A, while implementations that do use a slit (e.g., 621B) may show a higher surface resistance, and a more concentrated leakage pattern 622B that is only immediately next to the antenna.

FIG. 7A illustrates an embodiment 700A in which two slits are implemented above an antenna 702. Indeed, as above, the antenna 702 may be embedded in a substrate 703 that is part of a lens in a pair of augmented reality glasses. The augmented reality glasses may include lenses having an active dimming coating. This active dimming coating may include transparent conductive oxide (TCO) layers such as indium tin oxide that are poor conductors. When antennas (e.g., 702) are placed near the TCO layers (e.g., 701), the radiated power from the antennas may couple to the TCO layer and may be dissipated as heat. This dissipation may degrade the radiated power of the antennas. The embodiment 700A of FIG. 7A may implement dual slits 704 that aim to increase the surface resistance of the TCO layer. These dual slits 704 may choke the path for current to flow over the TCO layer and may reduce radiated power dissipation.

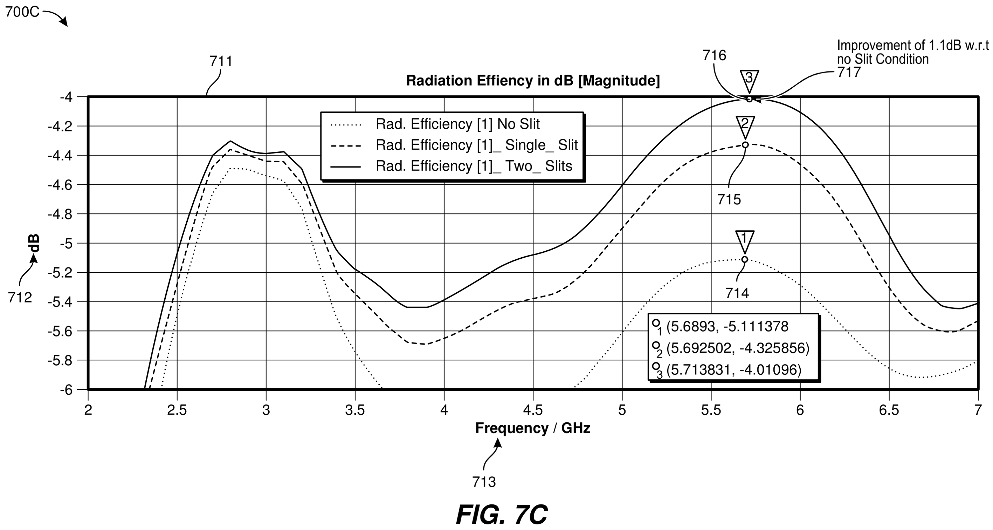

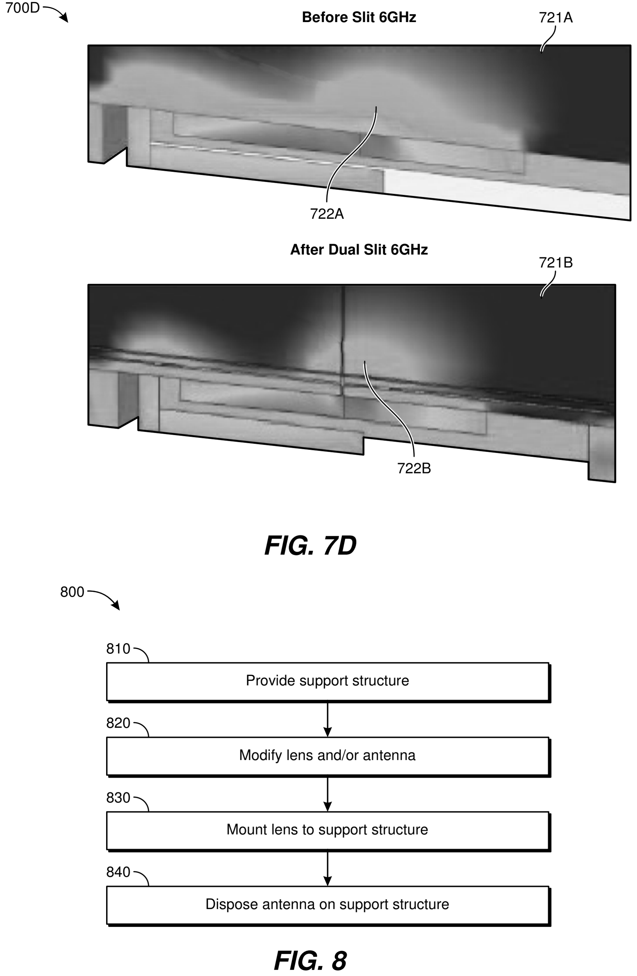

In some cases, as shown in embodiment 700B of FIG. 7B, the dual slits 704 may be spaced in a manner to provide optimal surface resistance. In this embodiment, the dual slits 704 may be cut or formed 0.5mm from the antenna 702 and 0.8mm from the antenna. This distance may be optimal for antennas that are designed to operate at a specific frequency. Antennas operating at different frequencies may dictate slits at different lengths to maximize surface resistance. Indeed, as shown in chart 711 in embodiment 700C of FIG. 7C, with frequency on the x-axis 713 and radiation efficiency on the y-axis 712, point 714 may represent the antenna radiation efficiency of an implementation with no slit (approximately - 5.1dB), with one slit (approximately -4.3dB at point 715), and with two slits (approximately -4dB at point 716). As such, having two slits may result in an improvement 717 of 1.1dB over having no slits. Other embodiments that implement more slits, longer slits, or different shaped slits may exhibit larger or smaller improvements over no slits. Embodiment 700D of FIG. 7D illustrates how antenna radiation leakage through the TCO layer may be reduced. In implementation 721A, an antenna may be implemented without a slit in the TCO layer, resulting in antenna radiation pattern 722A, whereas in implementation 721B, an antenna may be implemented in conjunction with a dual slit, resulting in an antenna radiation pattern 722B that is more localized and defined, and indicates that less antenna radiation is being absorbed by the TCO layer and lost as heat.

FIG. 8 is a flow diagram of method of manufacturing 800 for generating or producing a wearable electronic device that includes at least one lens that has a conductive layer (e.g., an active dimming layer). The steps shown in FIG. 8 may be performed by any suitable manufacturing equipment, and may be controlled using any suitable computer-executable code and/or computing system.

The method of manufacturing 800 may include, at step 810, providing a support structure (e.g., a frame for augmented reality glasses or a watch enclosure for a smartwatch). Next, at step 830, the method may include mounting at least one lens to the support structure. The lens may include at least one conductive layer that includes conductive material such as indium tin oxide. Still further, at step 840, the method may include disposing an antenna on the support structure within a specified maximum distance from the lens (e.g., close enough to where coupling between the antenna's radiation and the TCO layer may occur). Various characteristics of the lens or the antenna may then be modified (e.g., at step 820 or later, after step 840), to reduce coupling between the antenna and the layer of conductive material in the lens. In some cases, these characteristics may be modified before the lens is mounted to the support structure. For instance, slits may be cut into the TCO layer of the lens before it is mounted, or the TCO layer may be trimmed back by a specified amount prior to being mounted onto the support structure.

The method of manufacturing 800 may produce a system that includes a support structure, a lens mounted to the support structure, and an antenna disposed on the support structure substantially next to the lens. The lens may include at least one conductive layer that includes conductive material, and various characteristics of the lens or the antenna may be modified to reduce coupling between the antenna and the layer of conductive material in the lens. In at least some embodiments, the conductive layer may be an active dimming layer configured to actively dim incoming light. The conductive material of the active dimming layer may be a transparent conductive oxide such as indium tin oxide.

In some embodiments, modifying the characteristics of the lens or the antenna may include increasing the distance between the conductive layer and the antenna. Increasing this distance may include removing at least some portion of the conductive material from the lens, or may include forming the lens to include a conductive layer that lacks conductive material on at least a portion of the lens. In cases where conductive material is removed, the amount of conductive material removed from the lens may be determined based on the minimum radiated power specified for use by the antenna. Thus, for instance, if the antenna is a WiFi antenna that requires at least X dBm of total radiated power to operate, the amount of conductive material removed from the lens may be enough to reduce coupling between the antenna and the conductive layer so that the amount of signal loss for the antenna falls below a specified maximum level. This may then allow the antenna to operate at the minimum amount (X dBm) of total radiated power.

In some cases, modifying the characteristics of the lens or the antenna may include routing the antenna further away from the conductive layer. For example, if some of the radiating elements of the antenna are placed immediately next to or close to the conductive layer, one or more of those radiating elements may be rerouted to another location. For instance, if the wearable device is a pair of augmented reality glasses, various traces or radiating elements of the antenna may be rerouted to another part of the rim of the lens, or may be rerouted to the bridge portion or to the temple arms of the augmented reality glasses. Thus, some or all of the radiating elements of a given antenna may be repositioned to locations further away from the conductive layer to reduce coupling between the radiating elements and the conductive layer. In some cases, this distance may be the minimum distance that allows the antenna to operate with a minimum total radiated power.

Additionally or alternatively, an antenna feed associated with the antenna may also be rerouted at least a minimum specified distance away from the conductive layer of the lens to avoid or reduce coupling between the antenna feed and the conductive layer. Other embodiments may modify the thickness of the conductive material on the conductive layer, and/or cut slits into the conductive layer of the lens. In some cases, these techniques for reducing coupling between the TCO layer and the surrounding antennas may be used in isolation or may be combined with each other to compound the benefits of each technique. In this manner, methods and systems may be provided for reducing or removing the coupling that may occur between antennas and active layer coatings on lenses.

### Example Embodiments

Example 1: A system comprising: a support structure, a lens mounted to the support structure, the lens including at least one conductive layer that includes conductive material, and an antenna disposed on the support structure within a specified maximum distance from the lens, wherein one or more characteristics of the lens or the antenna are modified to reduce coupling between the antenna and the layer of conductive material in the lens.

Example 2: The system of Example 1, wherein the conductive layer of the lens comprises an active dimming layer configured to actively dim incoming light.

Example 3: The system of any of Examples 1 and 2, wherein the conductive material of the active dimming layer comprises a transparent conductive oxide.

Example 4:The system of any of Examples 1-3, wherein the conductive material of the active dimming layer comprises indium tin oxide.

Example 5:The system of any of Examples 1-4, wherein modifying the characteristics of the lens or the antenna includes increasing a distance between the conductive layer including the conductive material and the antenna.

Example 6: The system of any of Examples 1-5, wherein the conductive material covers at least a minimum specified portion of the lens.

Example 7: The system of any of Examples 1-6, wherein modifying the characteristics of the lens or the antenna includes removing at least a portion of the conductive material from the lens.

Example 8:The system of any of Examples 1-7, wherein the amount of conductive material removed from the lens is determined based on a minimum radiated power specified for use by the antenna.

Example 9: The system of any of Examples 1-8, wherein the amount of conductive material removed from the lens is determined based on a specified maximum amount of signal loss for the antenna.

Example 10: The system of any of Examples 1-9, wherein modifying the characteristics of the lens or the antenna includes routing the antenna further away from the conductive layer.

Example 11: The system of any of Examples 1-10, wherein routing the antenna further away from the conductive layer includes routing one or more traces of the antenna to a position on the support structure that is at least a minimum specified distance from the conductive layer.

Example 12: The system of any of Examples 1-11, wherein modifying the characteristics of the lens or the antenna includes increasing a surface resistance of the conductive material.

Example 13: The system of any of Examples 1-12, wherein increasing a surface resistance of the conductive material includes cutting one or more slits into the conductive layer of the lens.

Example 14: The system of any of Examples 1-13, wherein the slits cut into the conductive layer of the lens comprise non-visible slits.

Example 15: A wearable device comprising: a support structure, a lens mounted to the support structure, the lens including at least one conductive layer that includes conductive material, and an antenna disposed on the support structure within a specified maximum distance from the lens, wherein one or more characteristics of the lens or the antenna are modified to reduce coupling between the antenna and the layer of conductive material in the lens.

Example 16: The wearable device of Example 15, wherein modifying the characteristics of the lens or the antenna includes rerouting an antenna feed associated with the antenna at least a minimum specified distance away from the conductive layer of the lens.

Example 17: The wearable device of any of Examples 15 and 16, wherein modifying the characteristics of the lens or the antenna includes modifying a thickness of the conductive material on the conductive layer.

Example 18: The wearable device of any of Examples 15-17, wherein modifying the characteristics of the lens or the antenna includes cutting one or more slits into the conductive layer of the lens.

Example 19: The wearable device of any of Examples 15-18, wherein modifying the characteristics of the lens or the antenna includes modifying at least one of a length of the slits, a shape of the slits, or a placement of the slits on the conductive layer of the lens.

Example 20: A method of manufacturing comprising: providing a support structure, mounting a lens to the support structure, the lens including at least one conductive layer that includes conductive material, and disposing an antenna on the support structure within a specified maximum distance from the lens, wherein one or more characteristics of the lens or the antenna are modified to reduce coupling between the antenna and the layer of conductive material in the lens.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

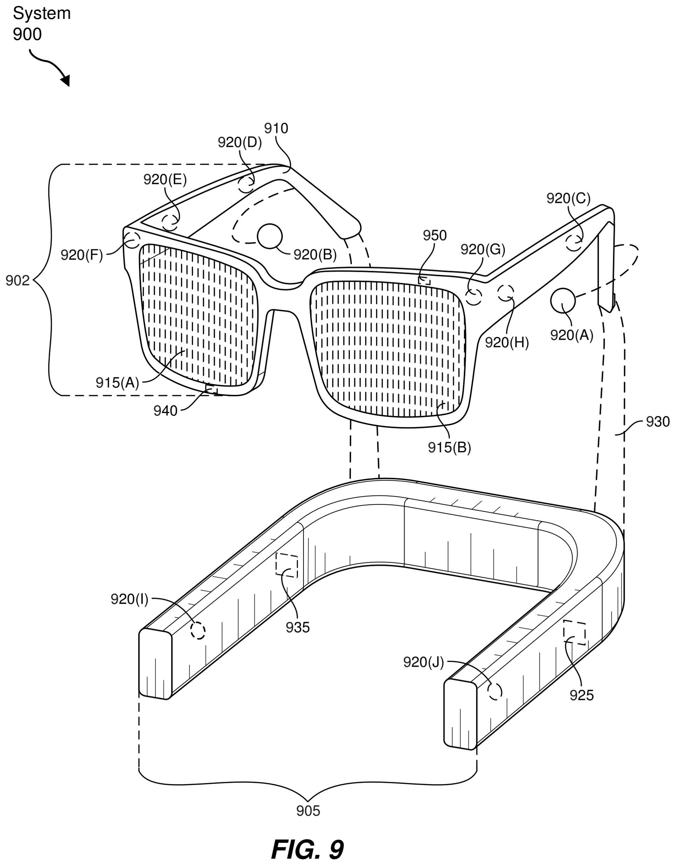

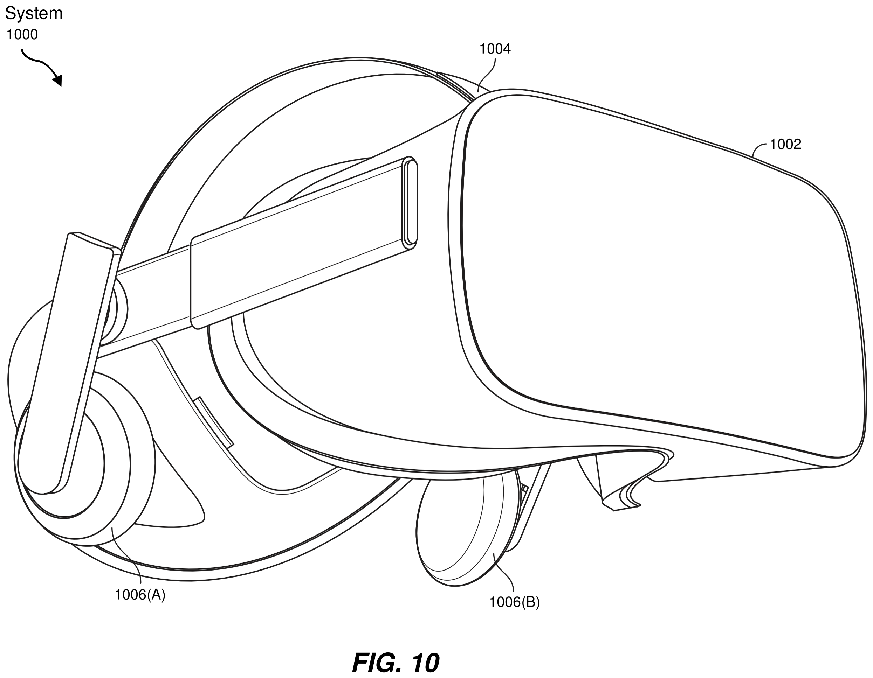

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 900 in FIG. 9) or that visually immerses a user in an artificial reality (such as, e.g., virtual-reality system 1000 in FIG. 10). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 9, augmented-reality system 900 may include an eyewear device 902 with a frame 910 configured to hold a left display device 915(A) and a right display device 915(B) in front of a user's eyes. Display devices 915(A) and 915(B) may act together or independently to present an image or series of images to a user. While augmented-reality system 900 includes two displays, embodiments of this disclosure may be implemented in augmented-reality systems with a single NED or more than two NEDs.

In some embodiments, augmented-reality system 900 may include one or more sensors, such as sensor 940. Sensor 940 may generate measurement signals in response to motion of augmented-reality system 900 and may be located on substantially any portion of frame 910. Sensor 940 may represent one or more of a variety of different sensing mechanisms, such as a position sensor, an inertial measurement unit (IMU), a depth camera assembly, a structured light emitter and/or detector, or any combination thereof. In some embodiments, augmented-reality system 900 may or may not include sensor 940 or may include more than one sensor. In embodiments in which sensor 940 includes an IMU, the IMU may generate calibration data based on measurement signals from sensor 940. Examples of sensor 940 may include, without limitation, accelerometers, gyroscopes, magnetometers, other suitable types of sensors that detect motion, sensors used for error correction of the IMU, or some combination thereof.

In some examples, augmented-reality system 900 may also include a microphone array with a plurality of acoustic transducers 920(A)-920(J), referred to collectively as acoustic transducers 920. Acoustic transducers 920 may represent transducers that detect air pressure variations induced by sound waves. Each acoustic transducer 920 may be configured to detect sound and convert the detected sound into an electronic format (e.g., an analog or digital format). The microphone array in FIG. 9 may include, for example, ten acoustic transducers: 920(A) and 920(B), which may be designed to be placed inside a corresponding ear of the user, acoustic transducers 920(C), 920(D), 920(E), 920(F), 920(G), and 920(H), which may be positioned at various locations on frame 910, and/or acoustic transducers 920(I) and 920(J), which may be positioned on a corresponding neckband 905.

In some embodiments, one or more of acoustic transducers 920(A)-(J) may be used as output transducers (e.g., speakers). For example, acoustic transducers 920(A) and/or 920(B) may be earbuds or any other suitable type of headphone or speaker.

The configuration of acoustic transducers 920 of the microphone array may vary. While augmented-reality system 900 is shown in FIG. 9 as having ten acoustic transducers 920, the number of acoustic transducers 920 may be greater or less than ten. In some embodiments, using higher numbers of acoustic transducers 920 may increase the amount of audio information collected and/or the sensitivity and accuracy of the audio information. In contrast, using a lower number of acoustic transducers 920 may decrease the computing power required by an associated controller 950 to process the collected audio information. In addition, the position of each acoustic transducer 920 of the microphone array may vary. For example, the position of an acoustic transducer 920 may include a defined position on the user, a defined coordinate on frame 910, an orientation associated with each acoustic transducer 920, or some combination thereof.

Acoustic transducers 920(A) and 920(B) may be positioned on different parts of the user's ear, such as behind the pinna, behind the tragus, and/or within the auricle or fossa. Or, there may be additional acoustic transducers 920 on or surrounding the ear in addition to acoustic transducers 920 inside the ear canal. Having an acoustic transducer 920 positioned next to an ear canal of a user may enable the microphone array to collect information on how sounds arrive at the ear canal. By positioning at least two of acoustic transducers 920 on either side of a user's head (e.g., as binaural microphones), augmented-reality device 900 may simulate binaural hearing and capture a 3D stereo sound field around about a user's head. In some embodiments, acoustic transducers 920(A) and 920(B) may be connected to augmented-reality system 900 via a wired connection 930, and in other embodiments acoustic transducers 920(A) and 920(B) may be connected to augmented-reality system 900 via a wireless connection (e.g., a BLUETOOTH connection). In still other embodiments, acoustic transducers 920(A) and 920(B) may not be used at all in conjunction with augmented-reality system 900.

Acoustic transducers 920 on frame 910 may be positioned in a variety of different ways, including along the length of the temples, across the bridge, above or below display devices 915(A) and 915(B), or some combination thereof. Acoustic transducers 920 may also be oriented such that the microphone array is able to detect sounds in a wide range of directions surrounding the user wearing the augmented-reality system 900. In some embodiments, an optimization process may be performed during manufacturing of augmented-reality system 900 to determine relative positioning of each acoustic transducer 920 in the microphone array.

In some examples, augmented-reality system 900 may include or be connected to an external device (e.g., a paired device), such as neckband 905. Neckband 905 generally represents any type or form of paired device. Thus, the following discussion of neckband 905 may also apply to various other paired devices, such as charging cases, smart watches, smart phones, wrist bands, other wearable devices, hand-held controllers, tablet computers, laptop computers, other external compute devices, etc.

As shown, neckband 905 may be coupled to eyewear device 902 via one or more connectors. The connectors may be wired or wireless and may include electrical and/or non-electrical (e.g., structural) components. In some cases, eyewear device 902 and neckband 905 may operate independently without any wired or wireless connection between them. While FIG. 9 illustrates the components of eyewear device 902 and neckband 905 in example locations on eyewear device 902 and neckband 905, the components may be located elsewhere and/or distributed differently on eyewear device 902 and/or neckband 905. In some embodiments, the components of eyewear device 902 and neckband 905 may be located on one or more additional peripheral devices paired with eyewear device 902, neckband 905, or some combination thereof.

Pairing external devices, such as neckband 905, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 900 may be provided by a paired device or shared between a paired device and an eyewear device, thus reducing the weight, heat profile, and form factor of the eyewear device overall while still retaining desired functionality. For example, neckband 905 may allow components that would otherwise be included on an eyewear device to be included in neckband 905 since users may tolerate a heavier weight load on their shoulders than they would tolerate on their heads. Neckband 905 may also have a larger surface area over which to diffuse and disperse heat to the ambient environment. Thus, neckband 905 may allow for greater battery and computation capacity than might otherwise have been possible on a stand-alone eyewear device. Since weight carried in neckband 905 may be less invasive to a user than weight carried in eyewear device 902, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 905 may be communicatively coupled with eyewear device 902 and/or to other devices. These other devices may provide certain functions (e.g., tracking, localizing, depth mapping, processing, storage, etc.) to augmented-reality system 900. In the embodiment of FIG. 9, neckband 905 may include two acoustic transducers (e.g., 920(I) and 920(J)) that are part of the microphone array (or potentially form their own microphone subarray). Neckband 905 may also include a controller 925 and a power source 935.

Acoustic transducers 920(I) and 920(J) of neckband 905 may be configured to detect sound and convert the detected sound into an electronic format (analog or digital). In the embodiment of FIG. 9, acoustic transducers 920(I) and 920(J) may be positioned on neckband 905, thereby increasing the distance between the neckband acoustic transducers 920(I) and 920(J) and other acoustic transducers 920 positioned on eyewear device 902. In some cases, increasing the distance between acoustic transducers 920 of the microphone array may improve the accuracy of beamforming performed via the microphone array. For example, if a sound is detected by acoustic transducers 920(C) and 920(D) and the distance between acoustic transducers 920(C) and 920(D) is greater than, e.g., the distance between acoustic transducers 920(D) and 920(E), the determined source location of the detected sound may be more accurate than if the sound had been detected by acoustic transducers 920(D) and 920(E).

Controller 925 of neckband 905 may process information generated by the sensors on neckband 905 and/or augmented-reality system 900. For example, controller 925 may process information from the microphone array that describes sounds detected by the microphone array. For each detected sound, controller 925 may perform a direction-of-arrival (DOA) estimation to estimate a direction from which the detected sound arrived at the microphone array. As the microphone array detects sounds, controller 925 may populate an audio data set with the information. In embodiments in which augmented-reality system 900 includes an inertial measurement unit, controller 925 may compute all inertial and spatial calculations from the IMU located on eyewear device 902. A connector may convey information between augmented-reality system 900 and neckband 905 and between augmented-reality system 900 and controller 925. The information may be in the form of optical data, electrical data, wireless data, or any other transmittable data form. Moving the processing of information generated by augmented-reality system 900 to neckband 905 may reduce weight and heat in eyewear device 902, making it more comfortable to the user.

Power source 935 in neckband 905 may provide power to eyewear device 902 and/or to neckband 905. Power source 935 may include, without limitation, lithium-ion batteries, lithium-polymer batteries, primary lithium batteries, alkaline batteries, or any other form of power storage. In some cases, power source 935 may be a wired power source. Including power source 935 on neckband 905 instead of on eyewear device 902 may help better distribute the weight and heat generated by power source 935.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 1000 in FIG. 10, that mostly or completely covers a user's field of view. Virtual-reality system 1000 may include a front rigid body 1002 and a band 1004 shaped to fit around a user's head. Virtual-reality system 1000 may also include output audio transducers 1006(A) and 1006(B). Furthermore, while not shown in FIG. 10, front rigid body 1002 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 900 and/or virtual-reality system 1000 may include one or more liquid crystal displays (LCDs), light emitting diode (LED) displays, microLED displays, organic LED (OLED) displays, digital light projector (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 900 and/or virtual-reality system 1000 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 900 and/or virtual-reality system 1000 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some embodiments, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

### CLAUSES

1. A system comprising:
   a support structure;
   a lens mounted to the support structure, the lens including at least one conductive layer that includes conductive material; and
   an antenna disposed on the support structure within a specified maximum distance from the lens,
   wherein one or more characteristics of the lens or the antenna are modified to reduce coupling between the antenna and the layer of conductive material in the lens.
2. The system of clause 1, wherein the conductive layer of the lens comprises an active dimming layer configured to actively dim incoming light.
3. The system of clause 2, wherein the conductive material of the active dimming layer comprises a transparent conductive oxide.
4. The system of clause 3, wherein the conductive material of the active dimming layer comprises indium tin oxide.
5. The system of clause 1, wherein modifying the characteristics of the lens or the antenna includes increasing a distance between the conductive layer including the conductive material and the antenna.
6. The system of clause 1, wherein the conductive material covers at least a minimum specified portion of the lens.
7. The system of clause 6, wherein modifying the characteristics of the lens or the antenna includes removing at least a portion of the conductive material from the lens;
   wherein the amount of conductive material removed from the lens is determined based on a minimum radiated power specified for use by the antenna; and/or
   wherein the amount of conductive material removed from the lens is determined based on a specified maximum amount of signal loss for the antenna.
8. The system of clause 1, wherein modifying the characteristics of the lens or the antenna includes routing the antenna further away from the conductive layer; wherein routing the antenna further away from the conductive layer includes routing one or more traces of the antenna to a position on the support structure that is at least a minimum specified distance from the conductive layer.
9. The system of clause 1, wherein modifying the characteristics of the lens or the antenna includes increasing a surface resistance of the conductive material.
10. The system of clause 9, wherein increasing a surface resistance of the conductive material includes cutting one or more slits into the conductive layer of the lens;
   wherein the slits cut into the conductive layer of the lens comprise non-visible slits.
11. A wearable device comprising:
   a support structure;
   a lens mounted to the support structure, the lens including at least one conductive layer that includes conductive material; and
   an antenna disposed on the support structure within a specified maximum distance from the lens,
   wherein one or more characteristics of the lens or the antenna are modified to reduce coupling between the antenna and the layer of conductive material in the lens.
12. The wearable device of clause 11, wherein modifying the characteristics of the lens or the antenna includes rerouting an antenna feed associated with the antenna at least a minimum specified distance away from the conductive layer of the lens; and/or
   wherein modifying the characteristics of the lens or the antenna includes modifying a thickness of the conductive material on the conductive layer.
13. The wearable device of clause 11, wherein modifying the characteristics of the lens or the antenna includes cutting one or more slits into the conductive layer of the lens.
14. The wearable device of clause 13, wherein modifying the characteristics of the lens or the antenna includes modifying at least one of a length of the slits, a shape of the slits, or a placement of the slits on the conductive layer of the lens.
15. A method of manufacturing comprising:
   providing a support structure;
   mounting a lens to the support structure, the lens including at least one conductive layer that includes conductive material; and
   disposing an antenna on the support structure within a specified maximum distance from the lens,
   wherein one or more characteristics of the lens or the antenna are modified to reduce coupling between the antenna and the layer of conductive material in the lens.

## Claims

1. A system comprising:
a support structure;
a lens mounted to the support structure, the lens including at least one conductive layer that includes conductive material; and
an antenna disposed on the support structure within a specified maximum distance from the lens,
wherein one or more characteristics of the lens or the antenna are modified to reduce coupling between the antenna and the layer of conductive material in the lens.

2. The system of claim 1, wherein the conductive layer of the lens comprises an active dimming layer configured to actively dim incoming light.

3. The system of claim 2, wherein the conductive material of the active dimming layer comprises a transparent conductive oxide.

4. The system of claim 3, wherein the conductive material of the active dimming layer comprises indium tin oxide.

5. The system of claim 1, wherein modifying the characteristics of the lens or the antenna includes increasing a distance between the conductive layer including the conductive material and the antenna.

6. The system of claim 1, wherein the conductive material covers at least a minimum specified portion of the lens.

7. The system of claim 6, wherein modifying the characteristics of the lens or the antenna includes removing at least a portion of the conductive material from the lens;
wherein the amount of conductive material removed from the lens is determined based on a minimum radiated power specified for use by the antenna; and/or
wherein the amount of conductive material removed from the lens is determined based on a specified maximum amount of signal loss for the antenna.

8. The system of claim 1, wherein modifying the characteristics of the lens or the antenna includes routing the antenna further away from the conductive layer; wherein routing the antenna further away from the conductive layer includes routing one or more traces of the antenna to a position on the support structure that is at least a minimum specified distance from the conductive layer.

9. The system of claim 1, wherein modifying the characteristics of the lens or the antenna includes increasing a surface resistance of the conductive material.

10. The system of claim 9, wherein increasing a surface resistance of the conductive material includes cutting one or more slits into the conductive layer of the lens;
wherein the slits cut into the conductive layer of the lens comprise non-visible slits.

11. A wearable device comprising:
a support structure;
a lens mounted to the support structure, the lens including at least one conductive layer that includes conductive material; and
an antenna disposed on the support structure within a specified maximum distance from the lens,
wherein one or more characteristics of the lens or the antenna are modified to reduce coupling between the antenna and the layer of conductive material in the lens.

12. The wearable device of claim 11, wherein modifying the characteristics of the lens or the antenna includes rerouting an antenna feed associated with the antenna at least a minimum specified distance away from the conductive layer of the lens; and/or
wherein modifying the characteristics of the lens or the antenna includes modifying a thickness of the conductive material on the conductive layer.

13. The wearable device of claim 11, wherein modifying the characteristics of the lens or the antenna includes cutting one or more slits into the conductive layer of the lens.

14. The wearable device of claim 13, wherein modifying the characteristics of the lens or the antenna includes modifying at least one of a length of the slits, a shape of the slits, or a placement of the slits on the conductive layer of the lens.

15. A method of manufacturing comprising:
providing a support structure;
mounting a lens to the support structure, the lens including at least one conductive layer that includes conductive material; and
disposing an antenna on the support structure within a specified maximum distance from the lens,
wherein one or more characteristics of the lens or the antenna are modified to reduce coupling between the antenna and the layer of conductive material in the lens.
